# EUROPEAN PATENT SPECIFICATION

(11) **EP 2 482 371 B1**
(45) Date of publication and mention of the grant of the patent: **12.03.2014**
(21) Application number: 10832817.0
(22) Date of filing: 15.11.2010
(51) Int. Cl.: H01M 8/04, H01M 8/02, H01M 8/10

(54) **SEPARATOR FOR FUEL CELL AND FUEL CELL PROVIDED WITH SAME**
BRENNSTOFFZELLENSEPARATOR UND BRENNSTOFFZELLE DAMIT
SÉPARATEUR POUR PILE À COMBUSTIBLE, ET PILE À COMBUSTIBLE COMPRENANT LEDIT SÉPARATEUR

(30) Priority: 25.11.2009 JP 2009268045
(43) Date of publication of application: 01.08.2012
(73) Proprietor: Panasonic Corporation, Kadoma-shi Osaka 571-8501 (JP)
(72) Inventor: KUSAKABE, Hiroki, Chuo-ku Osaka-shi Osaka 540-6207 (JP); KAWABATA, Norihiko, Chuo-ku Osaka-shi Osaka 540-6207 (JP); UMEDA, Takahiro, Chuo-ku Osaka-shi Osaka 540-6207 (JP); KOASHI, Naotsugu, Chuo-ku Osaka-shi Osaka 540-6207 (JP)
(74) Representative: Grünecker, Kinkeldey, Stockmair & Schwanhäusser
(86) International application number: PCT/JP2010/006690
(87) International publication number: WO 2011/064961

(56) References cited:
- JP-A- 2000 164 230
- JP-A- 2001 052 723
- JP-A- 2007 207 744
- JP-A- 2007 207 744
- JP-A- 2007 266 012
- JP-A- 2008 010 179
- US-A1- 2005 271 909
- US-B1- 6 528 196

## Description

### Technical Field

The present invention relates to a fuel cell separator and a fuel cell including the fuel cell separator, and particularly to the configuration of the fuel cell separator.

### Background Art

A polymer electrolyte fuel cell (hereinafter referred to as a "PEFC") causes an electrochemical reaction between a hydrogen-containing fuel gas and an oxygen-containing oxidizing gas, such as air, to generate electric power and heat at the same time. A unit cell (cell) of the PEFC includes a MEA (Membrane-Electrode Assembly), gaskets, and electrically conductive plate-shaped separators. The MEA is constituted by a polymer electrolyte membrane and a pair of gas diffusion electrodes (an anode and a cathode).

Manifold holes (a reactant gas supply manifold hole and a reactant gas discharge manifold hole) are formed on a main surface of the separator. The manifold holes form manifolds through which the fuel gas or the oxidizing gas (each of these gases is called "reactant gas") is supplied and discharged. On a main surface contacting the gas diffusion electrode, a groove-shaped, serpentine reactant gas channel through which the reactant gas flows is formed so as to communicate with these manifold holes.

A solid polymer electrolyte fuel cell separator is known, in which corner portions of turn groove portions of the serpentine reactant gas channel are omitted (see PTL 1, for example). Here, Fig. 8 is a front view schematically showing the schematic configuration of the solid polymer electrolyte fuel cell separator (hereinafter simply referred to as a "separator") disclosed in PTL 1. In Fig. 8, an upper-lower direction of the separator is shown as an upper-lower direction of the drawing.

As shown in Fig. 8, in the separator disclosed in PTL 1, a distance from a boundary 333 between an independent flow groove portion 323 or 324 and a turn groove portion 321 up to an end 307 of a flow groove 320 decreases as the independent flow groove portion 323 or 324 separates from a boundary convex portion 325 formed between the independent flow groove portion 323 and the independent flow groove portion 324, the end 307 being located in a direction in which straight grooves of the independent flow groove portions 323 and 324 are extended. To be specific, convex portions 323a and 324a of the independent flow groove portions 323 and 324 extend so as to get close to the end 307 of the flow groove 320 as they separate from the boundary convex portion 325. The turn groove portion 321 is formed to have a substantially semicircular shape.

By such a shape, in the separator disclosed in PTL 1, the gas having been supplied through the independent flow groove portions 323 to the turn groove portion 321 is supplied to the independent flow groove portions 324 through grid-like grooves of the turn groove portion 321. The gas and condensed water can be prevented from staying at a portion 350A located in the vicinity of an uppermost independent flow groove portion 323A extending up to the vicinity of the end 307 of the flow groove 320. In addition, since the convex portions 323a and 324a of the independent flow groove portions 323 and 324 are extending, the contact area between the separator and the electrode is large, and the contact resistance can be reduced.

### Citation List

### Patent Literature

PTL 1: Japanese Patent No. 4120072

US 6 528 196 A1 relates to a fuel cell stack having a plurality of fuel cell units, a plurality of flow passage grooves including a bent section. JP 2007 207744 A relates to a separator for a fuel cell.

### Summary of Invention

### Technical Problem

However, even in the separator disclosed in PTL 1, although the reactant gas having flowed through the uppermost independent flow groove portion 323 flows along the end 307, the reactant gas having flowed through the other independent flow groove portions 323 does not reach the end 307 and flows through the independent flow groove portions 324 located closer to the boundary convex portion 325. Therefore, the amount of reactant gas flowing from the upper portion 350A to a lower portion 350B in the vicinity of the end 307 becomes small. Especially, the reactant gas and the condensed water tend to stay at a hatched portion 350.

Therefore, there is still room for improvement in the separator disclosed in PTL 1.

The present invention was made to solve the above problems, and an object of the present invention is to provide a fuel cell separator capable of further preventing the reactant gas and the condensed water from staying at the turn portion and further reducing the electrical contact resistance between the separator and the electrode, and a fuel cell including the fuel cell separator.

### Solution to Problem

In order to solve the above problems, a fuel cell separator according to the present invention is formed to have a plate shape and includes a reactant gas flow region which is formed on at least one main surface of the fuel cell separator, includes a plurality of groove-like straight portions and one or more turn portions, and is formed to have a bent shape and through which a reactant gas flows, wherein: first rib portions are formed among the plurality of straight portions; the plurality of straight portion are formed such that the plurality of first rib portions are formed; the turn portion is formed so as to connect an upstream straight portion that is the straight portion located upstream of the turn portion and a downstream straight portion that is the straight portion located downstream of the turn portion and is formed such that the reactant gas flows from the upstream straight portion therethrough to the downstream straight portion; at least one of the one or more turn portions includes a gas mixing portion, a gas meeting portion through which the reactant gas from the upstream straight portion flows to the gas mixing portion, and a gas separating portion through which the reactant gas from the gas mixing portion flows to the downstream straight portion; the gas mixing portion includes a depressed portion and a plurality of protruding portions configured to protrude from a bottom surface of the depressed portion; second rib portions are formed in the gas meeting portion and the gas separating portion, base ends of the second rib portions being connected to the first rib portions, the second rib portions being configured to extend from the first rib portions; and when the first rib portion formed between the upstream straight portion and the downstream straight portion adjacent to each other is defined as a center rib portion, and a virtual line passing through a width-direction center of the center rib portion and extending in a direction in which the center rib portion extends is defined as a center line, the second rib portions are formed such that regarding two adjacent second rib portions, the length of the second rib portion located closer to the center rib portion is shorter than the length of the second rib portion located farther from the center rib portion in a direction in which the second rib portions extend, and an outermost second rib portion is formed so as to be bent inward toward the center line when viewed from a thickness direction of the fuel cell separator, the outermost second rib portion being the second rib portion formed in at least one of the gas meeting portion and the gas separating portion and being the second rib portion located farthest from the center rib portion.

With this, the reactant gas and the condensed water can be prevented from staying at the outer peripheral portion of the turn portion. In addition, the electrical contact resistance between the fuel cell separator and the electrode can be reduced.

In the fuel cell separator according to the present invention, in at least one of the gas meeting portion and the gas separating portion in each of which the outermost second rib portion is formed, a plurality of second rib portions may be formed so as to be bent inward toward the center line, and bent second rib portions that are the plurality of second rib portions formed so as to be bent may be adjacent to one another and be formed such that a distance between a tip end portion of the second rib portion located closer to the center rib portion and the center line is equal to or longer than a distance between a tip end portion of the second rib portion located farther from the center rib portion and the center line.

In the fuel cell separator according to the present invention, the protruding portions may be provided so as to overlap one another when viewed from a direction in which the first rib portions extend.

In the fuel cell separator according to the present invention, the protruding portions may be provided on extensions of the second rib portions.

In the fuel cell separator according to the present invention, the protruding portions may be provided so as to overlap one another when viewed from a direction perpendicular to a direction in which the first rib portions extend.

In the fuel cell separator according to the present invention, the protruding portions may be provided in a zigzag manner when viewed from a direction perpendicular to a direction in which the first rib portions extend.

In the fuel cell separator according to the present invention, at least one or more protruding portions may be formed between a tip end of the outermost second rib portion and the center line.

In the fuel cell separator according to the present invention, the outermost second rib portion may include a long portion extending from the first rib portion and a short portion extending from a tip end of the long portion inward toward the center line, and the short portion may be formed so as to extend along an outer end of the turn portion.

In the fuel cell separator according to the present invention, the outermost second rib portion may be formed to have an L shape when viewed from the thickness direction of the fuel cell separator.

In the fuel cell separator according to the present invention, the protruding portions may be provided on an extension of a groove formed between the short portion of the outermost second rib portion and the outer end of the turn portion.

In the fuel cell separator according to the present invention, the protruding portions provided on the extension of the groove formed between the short portion of the outermost second rib portion and the outer end of the turn portion may be formed by a part of the outer end of the turn portion.

In the fuel cell separator according to the present invention, each of the bent second rib portions may include a long portion extending from the first rib portion and a short portion extending from a tip end of the long portion inward toward the center line, and the short portion may be formed so as to extend along an outer end of the turn portion.

In the fuel cell separator according to the present invention, the bent second rib portion may be formed to have an L shape when viewed from the thickness direction of the fuel cell separator.

In the fuel cell separator according to the present invention, the reactant gas flow region may be formed such that the number of upstream straight portions is equal to or larger than the number of downstream straight portions.

In the fuel cell separator according to the present invention, the second rib portions may be formed such that a distance between an outer end of the turn portion and an end of each of the second rib portions, the end being located closest to the outer end of the turn portion, increases as the second rib portion is located farther from the center rib portion in an arrangement of the straight portions.

In the fuel cell separator according to the present invention, the reactant gas flow region may be formed to have a band shape as a whole.

In the fuel cell separator according to the present invention, the reactant gas flow region may be formed to have a serpentine shape as a whole.

In the fuel cell separator according to the present invention, in a case where S denotes an area of the gas mixing portion, A denotes a distance from a tip end of the second rib portion connected to the center rib portion up to an outer end of the turn portion, and B denotes a length of the turn portion in a direction perpendicular to the center line, the gas mixing portion may be formed such that the area S of the gas mixing portion satisfies S<AxB/2.

A fuel cell according to the present invention includes: a pair of fuel cell separators including the fuel cell separator according to any one of claims 1 to 17; and an electrolyte layer-electrode assembly including an electrolyte layer and a pair of electrodes sandwiching the electrolyte layer, wherein the electrolyte layer-electrode assembly is sandwiched between the pair of fuel cell separators.

With this, the reactant gas and the condensed water can be prevented from staying at the outer peripheral portion of the turn portion. In addition, the electrical contact resistance between the fuel cell separator and the electrode can be reduced.

The above object, other objects, features and advantages of the present invention will be made clear by the following detailed explanation of preferred embodiments with reference to the attached drawings.

### Advantageous Effects of Invention

According to the fuel cell separator and fuel cell of the present invention, the reactant gas and condensed water can be further prevented from staying at the turn portion, and the electrical contact resistance between the separator and the electrode can be further reduced.

### Brief Description of Drawings

[Fig. 1] Fig. 1 is a schematic diagram showing the schematic configuration of a fuel cell according to Embodiment 1 of the present invention.
[Fig. 2] Fig. 2 is a schematic diagram showing the schematic configuration of a fuel cell separator in the fuel cell shown in Fig. 1.
[Fig. 3] Fig. 3 is an enlarged schematic diagram showing the vicinity of a turn portion of a fuel gas flow region in the fuel cell separator shown in Fig. 2.
[Fig. 4] Fig. 4 is a cross-sectional view schematically showing the schematic configuration of a fuel cell stack in a fuel cell system shown in Figs. 1 and 2.
[Fig. 5] Fig. 5 is an enlarged schematic diagram showing the vicinity of the turn portion of the fuel gas flow region in the fuel cell separator according to Embodiment 3 of the present invention.
[Fig. 6] Fig. 6 is an enlarged schematic diagram showing the vicinity of the turn portion of the fuel gas flow region in the fuel cell separator according to Embodiment 4 of the present invention.
[Fig. 7] Fig. 7 is an enlarged schematic diagram showing the vicinity of the turn portion of the fuel gas flow region in the fuel cell separator according to Embodiment 4 of the present invention.

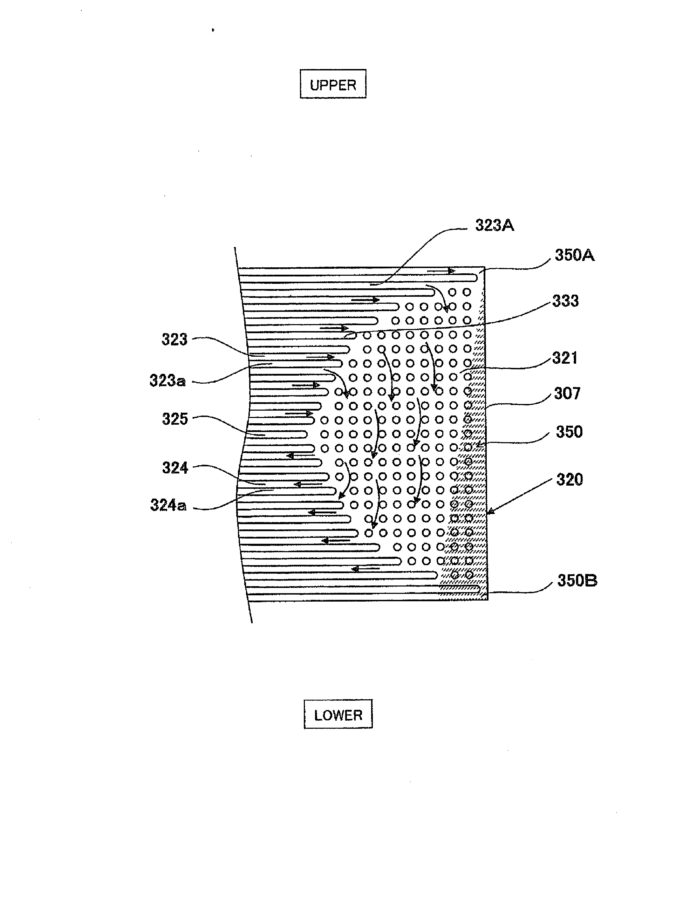

[Fig. 8] Fig. 8 is a front view schematically showing the schematic configuration of a solid polymer electrolyte fuel cell separator disclosed in PTL 1.

### Description of Embodiments

Hereinafter, preferred embodiments of the present invention will be explained in reference to the drawings. In the drawings, the same reference signs are used for the same or corresponding components, and a repetition of the same explanation is avoided. In addition, in the drawings, only the components necessary to explain the present invention are shown, and the other components are omitted. Further, the present invention is not limited to the following embodiments.

### Embodiment 1

### Configuration of Fuel Cell

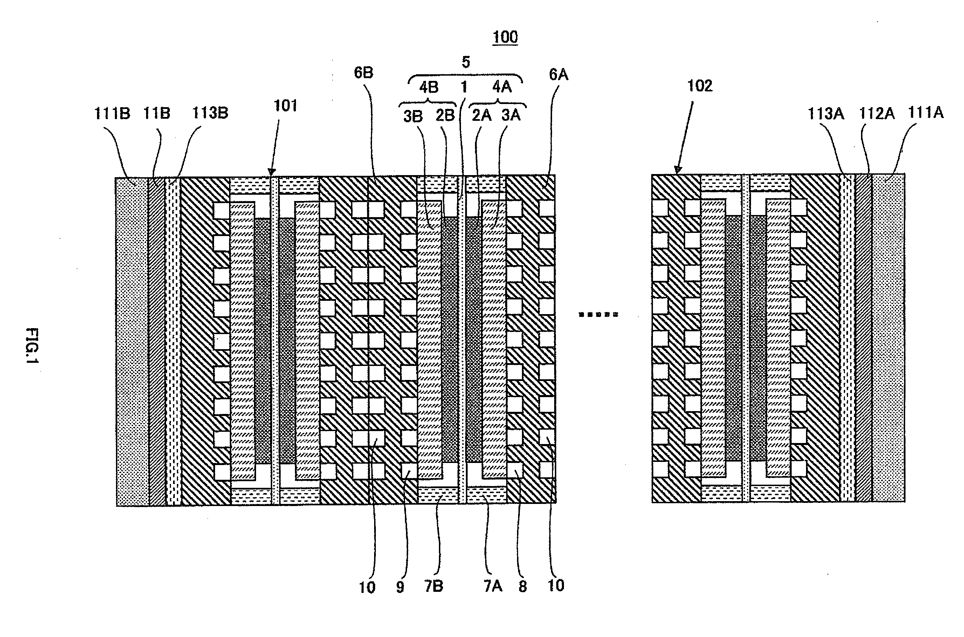

Fig. 1 is a schematic diagram showing the schematic configuration of a fuel cell according to Embodiment 1 of the present invention.

As shown in Fig. 1, a fuel cell 100 according to Embodiment 1 of the present invention includes, for example, a cell stack body 102, end plates 111A and 111B respectively provided on both ends of the cell stack body 102, and fastening members (not shown) configured to fasten the cell stack body 102 and the end plates 111A and 111B in a direction in which cells 101 are stacked. An insulating plate 112A and a current collector 113A are provided between the end plate 111A and the cell stack body 102. Similarly, an insulating plate 112B and a current collector 113B are provided between the end plate 111B and the cell stack body 102. The cell stack body 102 includes a plurality of cells 101 and is formed by stacking the plurality of cells 101 in a thickness direction of the cell 101.

A fuel gas supply manifold, an oxidizing gas supply manifold, a cooling medium supply manifold, a fuel gas discharge manifold, an oxidizing gas discharge manifold, and a cooling medium discharge manifold (which are not shown) are formed on the cell stack body 102. Through holes corresponding to (communicating with) the manifolds, such as the fuel gas supply manifold, are formed on the end plate 111 A, the insulating plate 112A, and the current collector 113A. A pipe through which a fuel gas is supplied or discharged, a pipe through which an oxidizing gas is supplied or discharged, and a pipe through which a cooling medium is supplied or discharged (which are not shown) are connected to the through holes of the end plate 111A, the through holes corresponding to the manifolds, such as the fuel gas supply manifold. With this, the fuel gas and the like are supplied to the fuel cell 100, and the unconsumed fuel gas and the like are discharged from the fuel cell 100.

As shown in Fig. 1, the cell 101 includes a MEA (Membrane-Electrode Assembly) 5, a pair of fuel cell separators (hereinafter simply referred to as "separators") 6A and 6B according to Embodiment 1 of the present invention, and a pair of gaskets 7A and 7B.

The MEA 5 includes a pair of electrodes 4A and 4B and an electrolyte layer 1 provided between the pair of electrodes 4A and 4B. In Embodiment 1, the electrode 4A constitutes an anode 4A, and the electrode 4B constitutes a cathode 4B. For example, a polymer electrolyte membrane (for example, Nafion (Product Name) produced by Du Pont in the U.S.) which selectively transports hydrogen ions can be used as the electrolyte layer 1.

In Embodiment 1, the electrolyte layer 1 has a substantially quadrangular shape (herein, rectangular shape). The anode 4A and the cathode 4B are respectively provided on both surfaces of the electrolyte layer 1 so as to be located on an inner side of the peripheral portion of the electrolyte layer 1. A fuel gas supply manifold hole, a cooling medium supply manifold hole, an oxidizing gas supply manifold hole, a fuel gas discharge manifold hole, a cooling medium discharge manifold hole, and an oxidizing gas discharge manifold hole are formed on the peripheral portion of the electrolyte layer 1 so as to penetrate the electrolyte layer 1 in the thickness direction (not shown).

The anode 4A includes an anode catalyst layer 2A and an anode gas diffusion layer 3A. The anode catalyst layer 2A is provided on one main surface of the electrolyte layer 1 and is formed by a mixture of electrically conductive carbon particles supporting electrode catalysts (for example, platinum and platinum-containing alloy) and a polymer electrolyte having hydrogen ion conductivity. The anode gas diffusion layer 3A is provided on a main surface of the anode catalyst layer 2A and has gas permeability and electrical conductivity. Similarly, the cathode 4B includes a cathode catalyst layer 2B and a cathode gas diffusion layer 3B. The cathode catalyst layer 2B is provided on the other main surface of the electrolyte layer 1 and is formed by the mixture of the electrically conductive carbon particles supporting the electrode catalysts (for example, platinum and platinum-containing alloy) and the polymer electrolyte having the hydrogen ion conductivity. The cathode gas diffusion layer 3B is provided on a main surface of the cathode catalyst layer 2B and has the gas permeability and the electrical conductivity.

Each of the anode catalyst layer 2A and the cathode catalyst layer 2B can be formed by a method known in the relevant field by using a catalyst layer forming ink containing the electrically conductive carbon particles supporting the electrode catalyst made of platinum and platinum-containing alloy, the polymer electrolyte, and a dispersion medium. Materials constituting the anode gas diffusion layer 3A and the cathode gas diffusion layer 3B are not especially limited, and materials known in the relevant field can be used. For example, an electrically conductive porous base material, such as carbon cloth or carbon paper, may be used. In addition, the electrically conductive porous base material may be subjected to water repellent finish by using a conventionally known method.

The pair of circular gaskets 7A and 7B are respectively provided around the anode 4A and cathode 4B of the MEA 5 (to be precise, on an outer side of the anode gas diffusion layer 3A and on an outer side of the cathode gas diffusion layer 3B) so as to sandwich the electrolyte layer 1. With this, the fuel gas and the oxidizing gas can be prevented from leaking to the outside of the cell 101 and can be prevented from being mixed with each other in the cell 101. The manifold holes (not shown), such as the fuel gas supply manifold hole, which are through holes extending in the thickness direction are formed on the peripheral portions of the gaskets 7A and 7B.

The pair of separators 6A and 6B each having electrical conductivity and a plate shape are provided so as to sandwich the MEA 5 and the gaskets 7A and 7B. With this, the MEA 5 is mechanically fixed. When the plurality of cells 101 are stacked in the thickness direction, the MEAs 5 are electrically connected to one another. As each of the separators 6A and 6B, a metal, graphite, or a combination of graphite and resin, each of which excels in thermal conductivity and electrical conductivity, can be used. For example, as each of the separators 6A and 6B, a separator produced by injection molding using a mixture of carbon powder and binder (solvent) or a separator produced by performing gold plating with respect to the surface of a titanium plate or a stainless steel plate can be used.

A fuel gas flow region 8 through which the fuel gas flows is formed on one main surface of the separator 6A, the main surface contacting the anode 4A. A groove-like cooling medium flow region 10 through which the cooling medium flows is formed on the other main surface of the separator 6A. Similarly, an oxidizing gas flow region 9 through which the oxidizing gas flows is formed on one main surface of the separator 6B, the main surface contacting the cathode 4B. The groove-like cooling medium flow region 10 through which the cooling medium flows is formed on the other main surface of the separator 6B. The manifold holes, such as the fuel gas supply manifold hole, are formed on the peripheral portions of the main surfaces of the separators 6A and 6B (not shown).

With this, in the cell 101, the fuel gas and the oxidizing gas (each of which is called a reactant gas) are respectively supplied to the anode 4A and the cathode 4B, and these reactant gases react with each other to generate electricity, heat, and water. The cooling medium, such as cooling water, is caused to flow through the cooling medium flow region 10 to recover the generated heat.

In Embodiment 1, the fuel cell 100 is configured by fastening the plurality of stacked cells 101 with the end plates 111 A and 111 B and the like. However, the present embodiment is not limited to this. The fuel cell 100 may be configured by fastening one cell 101 with the end plates 111A and 111B.

### Configuration of Fuel Cell Separator

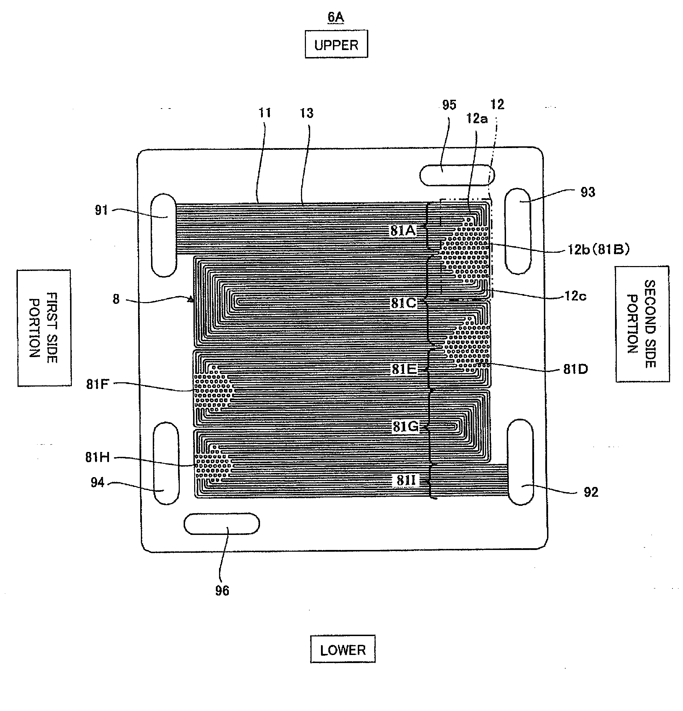

Next, the configuration of the fuel cell separator (herein, the separator 6A) according to Embodiment 1 of the present invention will be explained in more detail in reference to Figs. 1 and 2. Since the separator 6B is the same in basic configuration as the separator 6A, an explanation thereof is omitted.

Fig. 2 is a schematic diagram showing the schematic configuration of the separator 6A in the fuel cell 100 shown in Fig. 1. In Fig. 2, the upper-lower direction of the separator is shown as the upper-lower direction of the drawing.

As shown in Figs. 1 and 2, the separator 6A is formed to have a plate shape and a substantially rectangular shape. A plurality of through holes are formed on the peripheral portion of the main surface of the separator 6A. These through holes constitute the manifold holes, such as a fuel gas supply manifold hole 91.

Specifically, the fuel gas supply manifold hole 91 is formed on an upper portion of one side portion (hereinafter referred to as a "first side portion") of the separator 6A, and an oxidizing gas discharge manifold hole 94 is formed on a lower portion of the first side portion. A cooling medium discharge manifold hole 96 is formed on an inner side of the oxidizing gas discharge manifold hole 94.

An oxidizing gas supply manifold hole 93 is formed on an upper portion of the other side portion (hereinafter referred to as a "second side portion") of the separator 6A, and a fuel gas discharge manifold hole 92 is formed on a lower portion of the second side portion. A cooling medium supply manifold hole 95 is formed on an inner side of the oxidizing gas supply manifold hole 93.

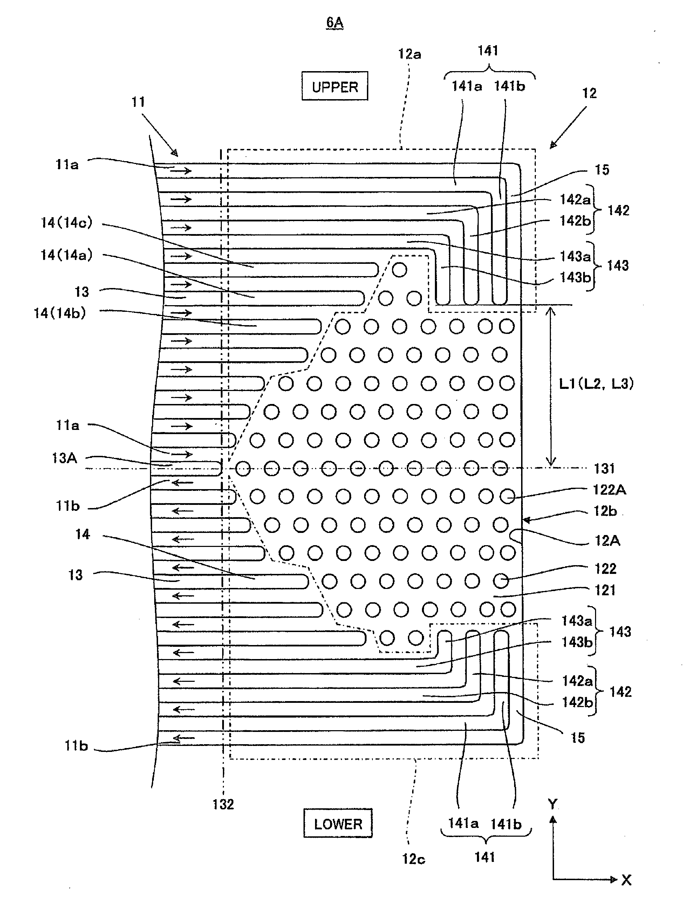

The fuel gas flow region 8 having a bent shape is formed on one main surface of the separator 6A so as to connect the fuel gas supply manifold hole 91 and the fuel gas discharge manifold hole 92. The fuel gas flow region 8 is formed in a band shape (more specifically, a serpentine shape) as a whole when viewed from the thickness direction of the separator 6A. The fuel gas flow region 8 includes a plurality of groove-like straight portions 11 and one or more turn portions 12. The turn portion 12 is formed to connect a straight portion 11a (hereinafter referred to as an "upstream straight portion" (see Fig. 3)) located upstream of the turn portion 12 and a straight portion 11b (hereinafter referred to as a "downstream straight portion" (see Fig. 3)) located downstream of the turn portion 12. The turn portion 12 is formed such that the fuel gas flowing therethrough turns round from the upstream straight portion 11a to the downstream straight portion 11b.

The straight portion 11 is formed by a channel groove and is configured such that the fuel gas flows (separately flow) therethrough. At least one (four in Embodiment 1) of the one or more turn portions 12 includes a gas meeting portion 12a, a gas mixing portion 12b, and a gas separating portion 12c. A portion between the channel grooves constituting the plurality of straight portions 11 forms (defines) a first rib portion 13 contacting the anode 4A. In other words, the portion between the channel grooves constituting the plurality of straight portions 11 is defined as the first rib portion 13 contacting the anode 4A. In Embodiment 1, the plurality of straight portions 11 are formed on one main surface of the separator 6A such that a plurality of (two or more) first rib portions 13 are formed.

In Embodiment 1, the plurality of straight portions 11 are formed such that the number of upstream straight portions 11a is larger than the number of downstream straight portions 11b. However, the present embodiment is not limited to this. The plurality of straight portions 11 may be formed such that the number of upstream straight portions 11a and the number of downstream straight portions 11b are the same as each other.

In other words, the fuel gas flow region 8 includes a plurality of separating regions 81 A, 81C, 81E, 81 G, and 81I and one or more meeting regions 81B, 81D, 81F, and 81H. Each of the plurality of separating regions 81A, 81C, 81E, 81G, and 81I includes at least the straight portion 11 among the plurality of straight portions 11 and one or more turn portions 12. Each of the one or more meeting regions 81B, 81D, 81F, and 81H is formed on at least one turn portion 12 and is provided between the separating region (hereinafter referred to as an "upstream separating region") located upstream of the turn portion 12 and the separating region (hereinafter referred to as a "downstream separating region") located downstream of the turn portion 12 among the plurality of separating regions 81A, 81C, 81E, 81G, and 81I. The fuel gases having flowed through the upstream separating region meet in the meeting region 81B, 81D, 81F, or 81H, and the fuel gases then separately flow to the downstream separating region. The meeting region 81B corresponds to the gas mixing portion 12b of the turn portion 12.

Next, the turn portion 12 including the gas meeting portion 12a and the like in the fuel gas flow region 8 of the separator 6A will be explained in detail in reference to Figs. 2 and 3.

Fig. 3 is an enlarged schematic diagram showing the vicinity of the turn portion 12 of the fuel gas flow region 8 of the separator 6A shown in Fig. 2. In Fig. 3, a direction in which the first rib portions 13 extend is an x-axis direction, and a direction perpendicular to the direction in which the first rib portions 13 extend is a y-axis direction. To be specific, the direction perpendicular to the direction in which the first rib portions 13 extend is the upper-lower direction in Fig. 3 and is not the thickness direction of the separator 6A. In Fig. 3, the upper-lower direction of the separator 6A is shown as the upper-lower direction of the drawing.

As shown in Fig. 3, the turn portion 12 of the fuel gas flow region 8 is formed to have a substantially rectangular shape when viewed from the thickness direction of the separator 6A, and the turn portion 12 is provided with a U-shaped outer peripheral wall. One end of the U-shaped outer peripheral wall is flush with a wall of the upstream straight portion 11a located on an uppermost side, and the other end of the U-shaped outer peripheral wall is flush with a wall of the downstream straight portion 11b located on a lowermost side. In Embodiment 1, a vertically extending wall (wall extending in the y-axis direction) of the outer peripheral wall is called an outer end 12A.

The first rib portion 13 formed between the upstream straight portion 11a and the downstream straight portion 11b adjacent to each other is defined as a center rib portion 13A. A virtual line passing through a width-direction center of the center rib portion 13A and extending in a direction in which the center rib portion 13A extends is defined as a center line 131. A virtual line passing through a tip end of the center rib portion 13A and extending in a direction perpendicular to the center line 131 (to be specific, in the upper-lower direction, that is, the y-axis direction) is defined as a boundary line 132. In this case, in Embodiment 1, a boundary between the turn portion 12 and the straight portion 11 is defined by the boundary line 132. In other words, the tip end of the first rib portion 13 is the line of intersection of the first rib portion 13 and the boundary line 132.

As described above, the turn portion 12 includes the gas meeting portion 12a shown by a broken line in Fig. 3, the gas separating portion 12c shown by a dashed line in Fig. 3, and the gas mixing portion 12b that is a portion other than the gas meeting portion 12a and the gas separating portion 12c. In the gas meeting portion 12a and the gas separating portion 12c, second rib portions 14 are provided. The base ends of the second rib portions 14 are connected to the first rib portions 13, and the second rib portions 14 extend from the first rib portions 13.

The second rib portions 14 are formed such that regarding two adjacent second rib portions 14, the second rib portion 14 located closer to the center rib portion 13A is shorter than the second rib portion 14 located farther from the center rib portion 13A in the direction in which the second rib portions 14 extend. Here, regarding the two adjacent second rib portions 14, the second rib portion 14 located closer to the center rib portion 13A denotes the second rib portion 14 located such that the distance in the upper-lower direction from the second rib portion 14 up to the center rib portion 13A is shorter, and the second rib portion 14 located farther from the center rib portion 13A denotes the second rib portion 14 located such that the distance in the upper-lower direction from the second rib portion 14 up to the center rib portion 13A is longer. Hereinafter, regarding the two adjacent second rib portions 14, the second rib portion 14 located closer to the center rib portion 13A may be referred to as an inner second rib portion 14, and the second rib portion 14 located farther from the center rib portion 13A may be referred to as an outer second rib portion 14.

A length in an extending direction denotes a length in a direction in which the first rib portions 13 extend, to be specific, a length in the x-axis direction (horizontal direction) shown in Fig. 3. In other words, the length in the extending direction denotes a length from the base end portion of the second rib portion 14 up to its endmost portion in the x-axis direction. Therefore, as shown in Fig. 3, the second rib portions 14 are formed such that the length of the inner second rib portion 14b is shorter than that of the outer second rib portion 14a in the x-axis direction.

In Fig. 3, the inner second rib portion 14b and the outer second rib portion 14a are just examples. For example, regarding the second rib portion 14a and a second rib portion 14c located on an upper side of the second rib portion 14a, since the second rib portion 14c is located on an outer side of the second rib portion 14a, the second rib portion 14a is the inner second rib portion, and the second rib portion 14c is the outer second rib portion.

In other words, the second rib portions 14 are formed such that a distance between the outer end 12A of the turn portion 12 and an end of each second rib portion 14, the end being located closest to the outer end 12A of the turn portion 12, increases as the second rib portion 14 is located farther from the center rib portion 13A in the arrangement of the straight portions 11 (in the arrangement in the upper-lower direction).

A second rib portion (hereinafter referred to as an "outermost second rib portion") 141 which is the second rib portion 14 provided in at least one of the gas meeting portion 12a and the gas separating portion 12c (In Embodiment 1, provided in each of the gas meeting portion 12a and the gas separating portion 12c) and is located on an outermost side (farthest side) from the center rib portion 13A is formed so as to be bent inward toward the center line 131. Specifically, the outermost second rib portion 141 includes a long portion 141a extending from the first rib portion 13 in the direction in which the first rib portions 13 extend and a short portion 141b extending from the tip end of the long portion 141a inward toward the center line 131. The short portion 141 b is formed so as to extend along the outer end 12A of the turn portion 12 (along the γ-axis direction). In other words, the outermost second rib portion 141 is formed to have an L shape when viewed from the thickness direction of the separator 6A.

In the gas meeting portion 12a in which the outermost second rib portion 141 is formed or the gas separating portion 12c in which the outermost second rib portion 141 is formed (in Embodiment 1, in each of the gas meeting portion 12a and the gas separating portion 12c), a plurality of adjacent second rib portions 14 are formed so as to be bent inward toward the center line 131. The plurality of second rib portions 14 formed so as to be bent include the outermost second rib portion 141. Therefore, in Embodiment 1, the second rib portions 14 formed so as to be bent are the outermost second rib portion 141, a second rib portion 142 (hereinafter referred to as a "bent second rib portion 142") adjacent to the outermost second rib portion 141, and a second rib portion 143 (hereinafter referred to as a "bent second rib portion 143") adjacent to the bent second rib portion 142.

The bent second rib portion 142 includes a long portion 142a extending from the first rib portion 13 in the direction in which the first rib portions 13 extend and a short portion 142b extending from the tip end of the long portion 142a inward toward the center line 131. The short portion 142b is formed so as to extend along the outer end 12A of the turn portion 12 (along the y-axis direction). In other words, the bent second rib portion 142 is formed to have an L shape when viewed from the thickness direction of the separator 6A. Since the bent second rib portion 143 is formed in the same manner as the bent second rib portion 142, a detailed explanation thereof is omitted.

The outermost second rib portion 141 and the bent second rib portions 142 and 143 are formed such that a distance between the tip end portion of the inner second rib portion 14 and the center line 131 is equal to or shorter than a distance between the tip end portion of the outer second rib portion 14 and the center line 131. Specifically, the outermost second rib portion 141 and the bent second rib portion 142 are formed such that a distance L2 between the tip end portion of the bent second rib portion 142 located on an inner side of the outermost second rib portion 141 and the center line 131 is equal to or longer than a distance L1 between the tip end portion of the outermost second rib portion 141 and the center line 131 (in Embodiment 1, the distances L1 and L2 are equal to each other). The bent second rib portion 142 and the bent second rib portion 143 are formed such that a distance L3 between the tip end portion of the bent second rib portion 143 and the center line 131 is equal to or longer than the distance L2 between the tip end portion of the bent second rib portion 142 and the center line 131 (in Embodiment 1, the distances L2 and L3 are equal to each other). In other words, the plurality of second rib portions 14 formed so as to be bent may be provided such that the tip end portion of the outer second rib portion 14 is located closer to the center line 131 than the tip end portion of the inner second rib portion 14 or that the tip end portion of the outer second rib portion 14 and the tip end portion of the inner second rib portion 14 coincide with (overlap) each other when viewed from the direction (the x-axis direction, that is, the horizontal direction) in which the center line 131 extends.

The gas mixing portion 12b includes a depressed portion 121 and a plurality of protruding portions 122. The depressed portion 121 is formed so as to communicate with grooves each formed between the second rib portions 14. Each protruding portion 122 is formed so as to extend from the bottom surface of the depressed portion 121 in the thickness direction of the separator 6A and is formed to have a circular cylindrical shape (to be precise, a true circular cylindrical shape). The protruding portions 122 are provided so as to overlap one another when viewed from the direction (the x-axis direction, that is, the horizontal direction) in which the first rib portion 13 extends. More specifically, the protruding portions 122 are formed on an extension of the second rib portion 14 (the second rib portion 14 which is not bent) when viewed from the direction (the x-axis direction, that is, the horizontal direction) in which the first rib portion 13 extends.

The protruding portions 122 are provided in a zigzag manner when viewed from a direction (the y-axis direction, that is, the upper-lower direction) perpendicular to the direction in which the first rib portions 13 extend. Here, the protruding portions 122 being provided in a zigzag manner denotes that the protruding portions 122 adjacent to each other in the y-axis direction are provided so as not overlap each other or partially overlap each other when viewed from the y-axis direction.

In Embodiment 1, the protruding portions 122 (outer protruding portions 122A) are formed on an extension of a groove (hereinafter referred to as an "outer channel 15") formed between the short portion 141b of the outermost second rib portion 141 and the outer end 12A of the turn portion 12. More specifically, the outer protruding portions 122A are formed so as to be partially located on the extension of the outer channel 15 when viewed from the direction (the y-axis direction, that is, the upper-lower direction) in which the short portion 141b of the outermost second rib portion 141 extends.

With this, the fuel gas having flowed through the upstream straight portions 11a flows through the gas meeting portion 12a of the turn portion 12 to be supplied to the gas mixing portion 12b. The flow of the fuel gas having been supplied to the gas mixing portion 12b is caused to be turbulent by the plurality of protruding portions 122. Thus, the mixing of the gas is promoted. The mixed fuel gas separately flows to the gas separating portion 12c. The fuel gas having separately flowed to the gas separating portion 12c flows through the downstream straight portions 11b.

In Embodiment 1, the protruding portion 122 is formed to have a substantially circular cylindrical shape. However, the present embodiment is not limited to this. The protruding portion 122 may be formed to have a circular cylindrical shape, a triangular prism, or a quadrangular prism. Herein, regarding the protruding portion 122, a cross section perpendicular to the thickness direction of the separator 6A is a true circle. However, the present embodiment is not limited to this, and the cross section of the protruding portion 122 may be an oval.

### Operational Advantages of Fuel Cell Separator and Fuel Cell Including Same

Next, the operational advantages of the separator 6A according to Embodiment 1 and the fuel cell 100 including the separator 6A will be explained in reference to Figs. 1 to 3. Since the operational advantages of the separator 6B through which the oxidizing gas flows are the same as those of the separator 6A through which the fuel gas flows, explanations thereof are omitted.

As described above, in the separator 6A according to Embodiment 1, the outermost second rib portion 141 of the gas meeting portion 12a of the turn portion 12 is formed so as to be bent inward toward the center line 131. With this, the groove (outer channel 15) formed between the outer peripheral wall of the turn portion 12 and the outermost second rib portion 141 of the gas meeting portion 12a is formed so as to extend in the lower direction. Therefore, the fuel gas having flowed through the outer channel 15 of the gas meeting portion 12a tends to flow in the lower direction, that is, flow along the outer end of the turn portion 12. On this account, the fuel gas and the condensed water (generated water) can be prevented from staying. In addition, the contact area between the separator 6A and the anode 4A can be increased, and the electrical contact resistance between the separator 6A and the anode 4A can be reduced.

In the separator 6A according to Embodiment 1, the outermost second rib portion 141 of the gas separating portion 12c of the turn portion 12 is formed so as to be bent inward toward the center line 131. With this, the groove (outer channel 15) formed between the outer peripheral wall of the turn portion 12 and the outermost second rib portion 141 of the gas separating portion 12c is formed so as to extend in the upper direction. Therefore, the fuel gas having flowed from the gas meeting portion 12a through the gas mixing portion 12b tends to be supplied to the outer channel 15 of the gas separating portion 12c. On this account, the fuel gas and the condensed water (generated water) can be prevented from staying. In addition, the contact area between the separator 6A and the anode 4A can be increased, and the electrical contact resistance between the separator 6A and the anode 4A can be reduced.

Further, in Embodiment 1, the outermost second rib portion 141 is provided in each of the gas meeting portion 12a and the gas separating portion 12c. Therefore, the fuel gas tends to be supplied from the outer channel 15 of the gas meeting portion 12a through the vicinity of the outer end 12A of the turn portion 12 to the outer channel 15 of the gas separating portion 12c. Thus, the fuel gas and the condensed water (generated water) can be further prevented from staying. In addition, the contact area between the separator 6A and the anode 4A can be increased, and the electrical contact resistance between the separator 6A and the anode 4A can be further reduced.

In Embodiment 1, the outermost second rib portion 141 and bent second rib portions 142 and 143 of the gas meeting portion 12a are formed so as to be bent inward toward the center line 131 and are formed such that the distance between the tip end portion of the inner second rib portion 14 and the center line 131 is equal to or shorter than the distance between the tip end portion of the outer second rib portion 14 and the center line 131. With this, a groove (channel) formed between the outermost second rib portion 141 and the bent second rib portion 142 and a groove (channel) formed between the bent second rib portion 142 and the bent second rib portion 143 are formed so as to extend in the lower direction. Therefore, the fuel gas having flowed through the groove (channel) formed between the outermost second rib portion 141 and the bent second rib portion 142 and the groove (channel) formed between the bent second rib portion 142 and the bent second rib portion 143 tends to flow in the lower direction. On this account, the fuel gas and the condensed water (generated water) can be further prevented from staying. In addition, the contact area between the separator 6A and the anode 4A can be increased, and the electrical contact resistance between the separator 6A and the anode 4A can be further reduced.

In Embodiment 1, the outermost second rib portion 141 and bent second rib portions 142 and 143 of the gas separating portion 12c are formed so as to be bent inward toward the center line 131 and are formed such that the distance between the tip end portion of the inner second rib portion 14 and the center line 131 is equal to or shorter than the distance between the tip end portion of the outer second rib portion 14 and the center line 131. With this, the groove (channel) formed between the outermost second rib portion 141 and the bent second rib portion 142 and the groove (channel) formed between the bent second rib portion 142 and the bent second rib portion 143 are formed so as to extend in the upper direction. Therefore, the fuel gas having flowed from the gas meeting portion 12a through the gas mixing portion 12b tends to be supplied to the groove (channel) formed between the outermost second rib portion 141 and the bent second rib portion 142 and the groove (channel) formed between the bent second rib portion 142 and the bent second rib portion 143. On this account, the fuel gas and the condensed water (generated water) can be further prevented from staying. In addition, the contact area between the separator 6A and the anode 4A can be increased, and the electrical contact resistance between the separator 6A and the anode 4A can be further reduced.

Further, in Embodiment 1, the outermost second rib portion 141 and the bent second rib portions 142 and 143 are provided in each of the gas meeting portion 12a and the gas separating portion 12c. Therefore, the fuel gas tends to be supplied from the groove (channel) formed between the outermost second rib portion 141 and bent second rib portion 142 of the gas meeting portion 12a and the groove (channel) formed between the bent second rib portion 142 and bent second rib portion 143 of the gas meeting portion 12a through the vicinity of the outer end 12A of the turn portion 12 to the groove (channel) formed between the outermost second rib portion 141 and bent second rib portion 142 of the gas separating portion 12c and the groove (channel) formed between the bent second rib portion 142 and bent second rib portion 143 of the gas separating portion 12c. On this account, the fuel gas and the condensed water (generated water) can be further prevented from staying. In addition, the contact area between the separator 6A and the anode 4A can be increased, and the electrical contact resistance between the separator 6A and the anode 4A can be further reduced.

In the gas meeting portion 12a and the gas separating portion 12c, the distance between the tip end portion of the inner second rib portion 14 and the center line 131 is set to be equal to or shorter than the distance between the tip end portion of the outer second rib portion 14 and the center line 131. Therefore, the fuel gas is not prevented from flowing toward the inside of the gas mixing portion 12b by the inner second rib portion 14. On this account, the mixing of the fuel gas in the gas mixing portion 12b is less likely to be prevented.

In Embodiment 1, in the gas mixing portion 12b, the protruding portions 122 are provided on the extension of the second rib portion 14 so as to overlap one another when viewed from the direction (x-axis direction) in which the first rib portion 13 extends. To be specific, the protruding portions 122 are not provided on an extension of the groove (channel) formed between the adjacent second rib portions 14 in the x-axis direction. Therefore, the flow of the fuel gas having flowed through the groove (channel) formed between the adjacent second rib portions 14 is not suppressed in the x-axis direction. On this account, the fuel gas can easily flow up to the outer end 12A of the turn portion 12. In addition, since the protruding portions 122 are provided in a zigzag manner when viewed from the direction (y-axis direction) perpendicular to the direction in which the first rib portions 13 extend, the mixing of the fuel gas can be promoted.

In Embodiment 1, the protruding portions 122 (outer protruding portions 122A) are provided on the extension of the outer channel 15. Therefore, the mixing of the fuel gas flowing through the vicinity of the outer end 12A of the turn portion 12 can be promoted.

### Embodiment 2

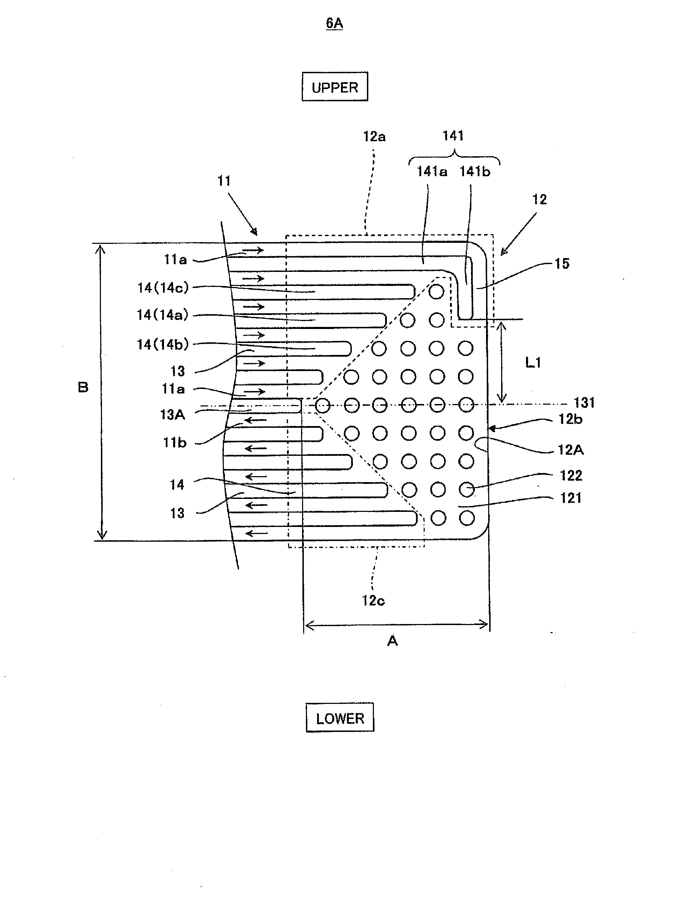

Fig. 4 is an enlarged schematic diagram showing the vicinity of the turn portion of the fuel gas flow region of the fuel cell separator according to Embodiment 2 of the present invention. Since the configuration of the oxidizing gas flow region is similar to that of the fuel gas flow region, a detailed explanation thereof is omitted.

As shown in Fig. 4, the fuel cell separator 6A according to Embodiment 2 of the present invention is the same in basic configuration as the fuel cell separator 6A according to Embodiment 1 but is different from the fuel cell separator 6A according to Embodiment 1 in that: the outermost second rib portion 141 is provided only in the gas meeting portion 12a; and only one second rib portion 14 (to be specific, the outermost second rib portion 141) is formed so as to be bent.

In the fuel cell separator 6A according to Embodiment 2, the protruding portions 122 of the gas mixing portion 12b are provided so as to overlap one another when viewed from the direction (the y-axis direction, that is, the upper-lower direction) perpendicular to the direction in which the first rib portions 13 extend. Even by this configuration, the fuel gas can be mixed in the gas mixing portion 12b.

In the fuel cell separator 6A according to Embodiment 2, in a case where S denotes the area of the gas mixing portion 12b, A denotes the distance from the tip end of the second rib portion 14 connected to the center rib portion 13A up to the outer end of the turn portion 12, and B denotes the length of the turn portion 12 in a direction perpendicular to the center line 131, the gas mixing portion 12b is formed such that the area S of the gas mixing portion 12b satisfies Formula (1).

S<AxB/2 (1)

With this, the contact area between the separator 6A and the anode 4A can be increased, and the electrical contact resistance between the separator 6A and the anode 4A can be further reduced.

In the fuel cell separator 6A according to Embodiment 2 configured as above and the fuel cell 100 including the fuel cell separator 6A, the fuel gas having flowed through the outer channel 15 of the gas meeting portion 12a tends to flow in the lower direction, to be specific, flow along the outer end of the turn portion 12. On this account, the fuel gas and the condensed water (generated water) can be prevented from staying. In addition, the contact area between the separator 6A and the anode 4A can be increased, and the electrical contact resistance between the separator 6A and the anode 4A can be reduced.

### Embodiment 3

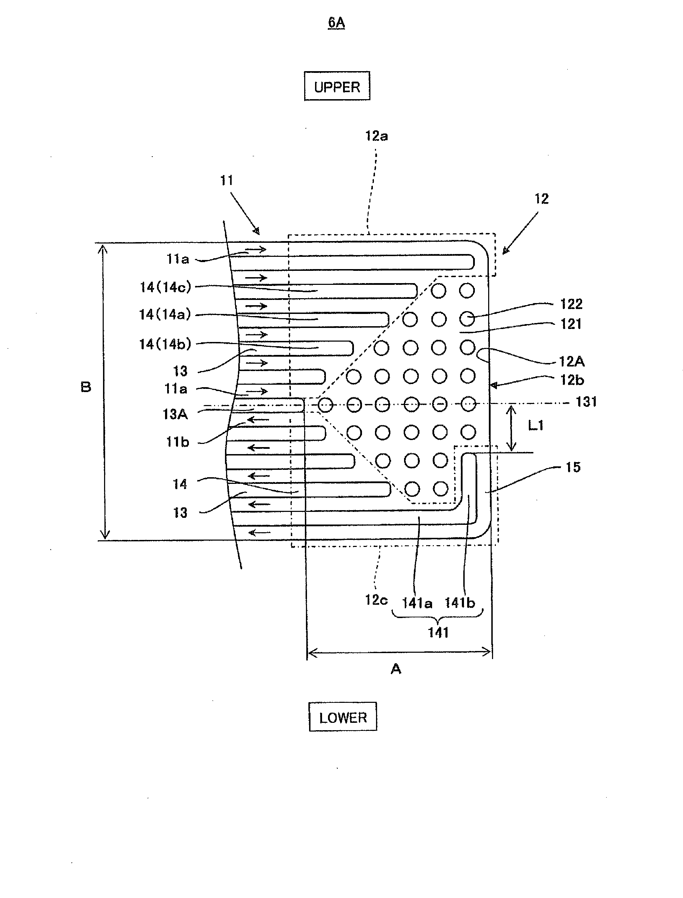

Fig. 5 is an enlarged schematic diagram showing the vicinity of the turn portion of the fuel gas flow region of the fuel cell separator according to Embodiment 3 of the present invention. Since the configuration of the oxidizing gas flow region is similar to that of the fuel gas flow region, a detailed explanation thereof is omitted.

As shown in Fig. 5, the fuel cell separator 6A according to Embodiment 3 of the present invention is the same in basic configuration as the fuel cell separator 6A according to Embodiment 2 but is different from the fuel cell separator 6A according to Embodiment 2 in that the outermost second rib portion 141 is provided in the gas separating portion 12c, not in the gas meeting portion 12a.

In the fuel cell separator 6A according to Embodiment 3 configured as above and the fuel cell 100 including the fuel cell separator 6A, the fuel gas having flowed from the gas meeting portion 12a through the gas mixing portion 12b tends to be supplied to the outer channel 15 of the gas separating portion 12c. Thus, the fuel gas and the condensed water (generated water) can be prevented from staying. In addition, the contact area between the separator 6A and the anode 4A can be increased, and the electrical contact resistance between the separator 6A and the anode 4A can be reduced.

### Embodiment 4

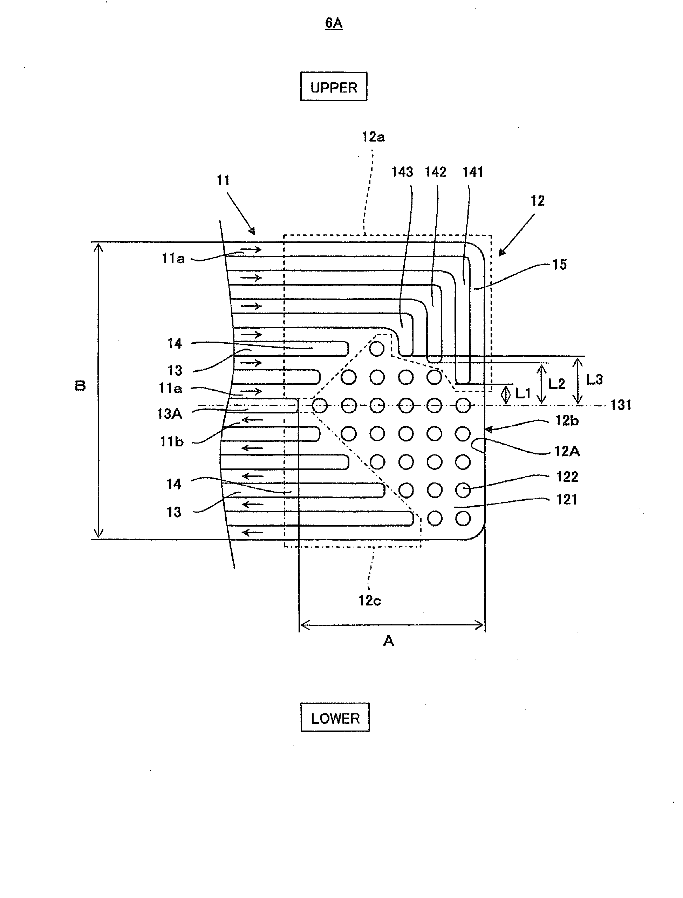

Fig. 6 is an enlarged schematic diagram showing the vicinity of the turn portion of the fuel gas flow region of the fuel cell separator according to Embodiment 4 of the present invention. Since the configuration of the oxidizing gas flow region is similar to that of the fuel gas flow region, a detailed explanation thereof is omitted.

As shown in Fig. 6, the fuel cell separator 6A according to Embodiment 4 of the present invention is the same in basic configuration as the fuel cell separator 6A according to Embodiment 1 but is different from the fuel cell separator 6A according to Embodiment 1 in that the outermost second rib portion 141 and the bent second rib portions 142 and 143 are provided only in the gas meeting portion 12a.

In addition, in the fuel cell separator 6A according to Embodiment 4, the outermost second rib portion 141 and the bent second rib portion 142 are formed such that the distance L2 between the tip end portion of the bent second rib portion 142 and the center line 131 is shorter than the distance L1 between the tip end portion of the outermost second rib portion 141 and the center line 131. Further, the bent second rib portion 142 and the bent second rib portion 143 are formed such that the distance L3 between the tip end portion of the bent second rib portion 143 and the center line 131 is shorter than the distance L2 between the tip end portion of the bent second rib portion 142 and the center line 131.

In the fuel cell separator 6A according to Embodiment 4 configured as above and the fuel cell 100 including the fuel cell separator 6A, the fuel gas having flowed through the outer channel 15 of the gas meeting portion 12a, the groove (channel) formed between the outermost second rib portion 141 and the bent second rib portion 142, and the groove (channel) formed between the bent second rib portion 142 and the bent second rib portion 143 tends to flow in the lower direction, that is, flow along the outer end of the turn portion 12. On this account, the fuel gas and the condensed water (generated water) can be prevented from staying.

In addition, for example, the fuel gas having flowed through the outer channel 15 is not prevented from flowing toward the inside of the gas mixing portion 12b by the bent second rib portions 142 and 143. To be specific, the fuel gas is not prevented from flowing toward the inside of the gas mixing portion 12b by the inner second rib portion 14. Therefore, the mixing of the fuel gas in the gas mixing portion 12b is less likely to be prevented.

In addition, the contact area between the separator 6A and the anode 4A can be increased, and the electrical contact resistance between the separator 6A and the anode 4A can be reduced.

In Embodiment 4, the outermost second rib portion 141, the bent second rib portion 142, and the bent second rib portion 143 are formed such that the distance L2 is shorter than the distance L1 and the distance L3 is shorter than the distance L2. However, the present embodiment is not limited to this. For example, the outermost second rib portion 141, the bent second rib portion 142, and the bent second rib portion 143 may be formed such that the distance L2 is equal to the distance L1 and the distance L3 is shorter than the distance L2 or that the distance L2 is shorter than the distance L1 and the distance L3 is equal to the distance L2.

### Embodiment 5

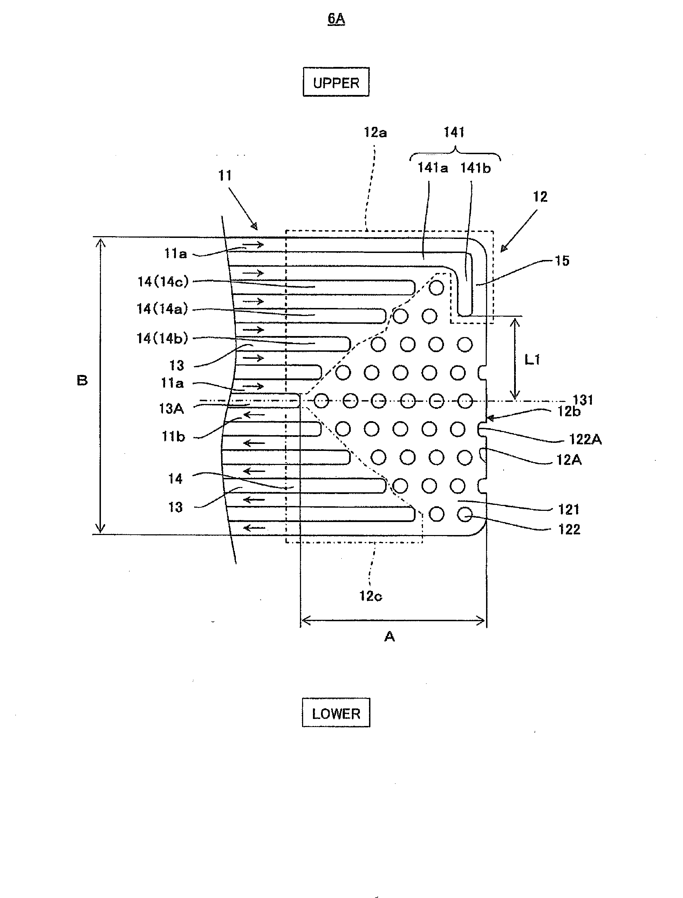

Fig. 7 is an enlarged schematic diagram showing the vicinity of the turn portion of the fuel gas flow region of the fuel cell separator according to Embodiment 4 of the present invention. Since the configuration of the oxidizing gas flow region is similar to that of the fuel gas flow region, a detailed explanation thereof is omitted.

As shown in Fig. 7, the fuel cell separator 6A according to Embodiment 5 of the present invention is the same in basic configuration as the fuel cell separator 6A according to Embodiment 2 but is different from the fuel cell separator 6A according to Embodiment 2 in that: the protruding portions 122 are provided in a zigzag manner when viewed from the direction (y-axis direction) perpendicular to the direction in which the first rib portions 13 extend; and the outer protruding portions 122A are formed by a part of the outer end 12A of the turn portion 12.

Specifically, convex portions 122A are formed such that the wall constituting the outer end 12A of the turn portion 12 partially projects inward (in the x-axis direction). The convex portions 122A constitute the outer protruding portions 122A. In other words, the outer protruding portions 122A are formed so as to contact the outer end 12A of the turn portion 12.

Even the fuel cell separator 6A according to Embodiment 5 configured as above and the fuel cell 100 including the fuel cell separator 6A can obtain the same operational advantages as the fuel cell separator 6A according to Embodiment 2 and the fuel cell 100 including the fuel cell separator 6A.

In addition, in the fuel cell separator 6A according to Embodiment 5 and the fuel cell 100 including the fuel cell separator 6A, the mixing of the fuel gas flowing through the vicinity of the outer end 12A of the turn portion 12 can be promoted.

As with the outer end 12A of the turn portion 12 of the fuel cell separator 6A according to Embodiment 5, the convex portions 122A may be formed at the outer end 12A of the turn portion 12 of the fuel cell separator 6A according to each of Embodiments 1 to 4.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention. In addition, various inventions can be made by suitable combinations of a plurality of components disclosed in the above embodiments.

### Industrial Applicability

According to the fuel cell separator of the present invention and the fuel cell including the fuel cell separator, the reactant gas can be prevented from staying at the turn portion, and the electrical contact resistance between the separator and the electrode can be further reduced. Therefore, the fuel cell separator of the present invention and the fuel cell including the fuel cell separator are useful in the technical field of fuel cells.

### Reference Signs List

- 1: electrolyte layer (polymer electrolyte membrane)
- 2A: anode catalyst layer
- 2B: cathode catalyst layer
- 3A: anode gas diffusion layer
- 3B: cathode gas diffusion layer
- 4A: anode (electrode)
- 4B: cathode (electrode)
- 5: MEA (Membrane-Electrode Assembly)
- 6A: separator
- 6B: separator
- 7A: gasket
- 7B: gasket
- 8: fuel gas flow region
- 9: oxidizing gas flow region
- 10: cooling medium flow region
- 6A: fuel cell separator
- 7A: gasket
- 7B: gasket
- 8: fuel gas flow region
- 9: oxidizing gas flow region
- 10: cooling medium flow region
- 10: cooling medium channel
- 11: straight portion
- 11a: upstream straight portion
- 11b: downstream straight portion
- 12: turn portion
- 12a: gas meeting portion
- 12b: gas mixing portion
- 12c: gas separating portion
- 12A: outer end
- 13: first rib portion
- 13A: center rib portion
- 14: second rib portion
- 14b: second rib portion
- 14a: second rib portion
- 14c: second rib portion
- 15: outer channel
- 91: fuel gas supply manifold hole
- 92: fuel gas discharge manifold hole
- 93: oxidizing gas supply manifold hole
- 94: oxidizing gas discharge manifold hole
- 95: cooling medium supply manifold hole
- 96: cooling medium discharge manifold hole
- 100: fuel cell
- 101: cell
- 102: cell stack body
- 111A: end plate
- 111B: end plate
- 112A: insulating plate
- 112B: insulating plate
- 113A: current collector
- 113B: current collector
- 121: depressed portion
- 122: protruding portion
- 122A: outer protruding portion (convex portion)
- 131: center line
- 132: boundary line
- 141: outermost second rib portion
- 141a: long portion
- 141b: short portion
- 142: bent second rib portion
- 142a: long portion
- 142b: short portion
- 143: bent second rib portion
- 307: end
- 320: flow groove
- 321: groove portion
- 323: independent flow groove portion
- 323A: independent flow groove portion
- 323a: convex portion
- 324: independent flow groove portion
- 324a: convex portion
- 325: boundary convex portion
- 333: boundary
- 350A: portion

## Claims

1. A fuel cell separator formed to have a plate shape, comprising a reactant gas flow region (8, 9) which is formed on at least one main surface of the fuel cell separator, the gas flow region (8, 9) includes a plurality of groove-like straight portions (11) and one or more turn portions (12), and is formed to have a bent shape and through which a reactant gas flows, wherein:
first rib portions (13) are formed among the plurality of straight portions (11);
the turn portion (12) is formed so as to connect one of the straight portions (11a) located upstream of the turn portion (12) and one of the straight portions (11b) located downstream of the turn portion (12) and is formed such that the reactant gas flows from the upstream straight portion (11a) therethrough to the downstream straight portion (11b);
when the first rib portion (13) formed between the upstream straight portion (11a) and the downstream straight portion (11 b) adjacent to each other is defined as a center rib portion (13A), and a virtual line passing through a width-direction center of the center rib portion (13A) and extending in a direction in which the center rib portion (13A) extends is defined as a center line (131), and a virtual line passing through a tip end of the center rib portion (13A) and extending in a direction perpendicular to the center line (131) is defined as a boundary line (132), which is a boundary between the turn portion (12) and the straight portion (11),
at least one of the one or more turn portions (12) includes a gas mixing portion (12b), a gas meeting portion (12a) through which the reactant gas from the upstream straight portion (11a) flows to the gas mixing portion (12b), and a gas separating portion (12c) through which the reactant gas from the gas mixing portion (12b) flows to the downstream straight portion (11b);
the gas meeting portion (12a) is formed on the side upstream of the center line (131), and the gas separating portion (12c) is formed on the side downstream of the center line (131),
the gas mixing portion (12b) includes a depressed portion (121) and a plurality of cylindrical shaped protruding portions (122) configured to protrude from a bottom surface of the depressed portion (121);
second rib portions (14) are formed in the gas meeting portion (12a) and the gas separating portion (12c), base ends of the second rib portions (14) being connected to the first rib portions (13), the second rib portions (14) being configured to extend from the first rib portions (13);
the second rib portions (14) are formed such that regarding two adjacent second rib portions (14), the length of the second rib portion (14) located closer to the center rib portion (13A) is shorter than the length of the second rib portion (14) located farther from the center rib portion (13A) in a direction in which the second rib portions (14) extend, and
an outermost bent second rib portion (141) is formed so as to be bent inward toward the center line (131) when viewed from a thickness direction of the fuel cell separator, the outermost bent second rib portion (141) being the second rib portion (14) formed in at least one of the gas meeting portion (12a) and the gas separating portion (12c) and being the second rib portion (14) located farthest from the center rib portion (13A); and
either (i) the second rib portions (14) other than the outermost bent second rib portion (141) are formed so as not to be bent,
or (ii) a plurality of bent second rib portions (141, 142, 143) including the outermost bent second rib portion (141) is formed in at least one of the gas meeting portion (12a) and the gas separating portion (12c), the plurality of bent second rib portions (141, 142, 143) is formed so as to be bent inward toward the center line (131); and
are adjacent to one another and are formed such that a distance between a tip end portion of the second rib portion (14) located closer to the center rib portion (13A) and the center line (131) is equal to or longer than a distance between a tip end portion of the second rib portion (14) located farther from the center rib portion (13A) and the center line (131),
and at least one of the second rib portions other than the plurality of bent second rib portions is formed as not to be bent.

2. The fuel cell separator according to claim 1, wherein the cylindrical shaped protruding portions (122) are provided so as to overlap one another when viewed from a direction in which the first rib portions (13) extend.

3. The fuel cell separator according to claim 1 or 2, wherein the cylindrical shaped protruding portions (122) are provided on extensions of the second rib portions (14).

4. The fuel cell separator according to any one of claims 1 to 3, wherein the cylindrical shaped protruding portions (122) are provided so as to overlap one another when viewed from a direction perpendicular to a direction in which the first rib portions (13) extend.

5. The fuel cell separator according to any one of claims 1 to 3, wherein the cylindrical shaped protruding portions (122) are provided in a zigzag manner when viewed from a direction perpendicular to a direction in which the first rib portions (13) extend.

6. The fuel cell separator according to any one of claims 1 to 5, wherein:
the outermost bent second rib portion (141) includes a long portion (141a) extending from the first rib portion (13) and a short portion (141b) extending from a tip end of the long portion (141a) inward toward the center line (131); and
the short portion (141b) is formed so as to extend along an outer end of the turn portion (12).

7. The fuel cell separator according to claim 6, wherein the outermost bent second rib portion (141) is formed to have an L shape when viewed from the thickness direction of the fuel cell separator.

8. The fuel cell separator according to claim 6, wherein the cylindrical shaped protruding portions (122) are provided on an extension of a groove (15) formed between the short portion (141b) of the outermost bent second rib portion (141) and the outer end of the turn portion (12).

9. The fuel cell separator according to claim 8, wherein the cylindrical shaped protruding portions (122) provided on the extension of the groove formed between the short portion (141b) of the outermost bent second rib portion (141, 142, 143) and the outer end of the turn portion (12) are formed by a part of the outer end of the turn portion (12).

10. The fuel cell separator according to any one of claims 1 to 9, wherein:
each of the bent second rib portions (142, 143) includes a long portion (142a, 143a) extending from the first rib portion (13) and a short portion (142b, 143b) extending from a tip end of the long portion (142a, 143a) inward toward the center line (131); and
the short portion (142b, 143b) is formed so as to extend along an outer end of the turn portion (12).

11. The fuel cell separator according to claim 10, wherein the bent second rib portion (142, 143) is formed to have an L shape when viewed from the thickness direction of the fuel cell separator.

12. The fuel cell separator according to any one of claims 1 to 11, wherein the reactant gas flow region (8, 9) is formed such that the number of upstream straight portions (11a) is equal to or larger than the number of downstream straight portions (11 b).

13. The fuel cell separator according to any one of claims 1 to 12, wherein the second rib portions (14) are formed such that a distance between an outer end of the turn portion (12) and an end of each of the second rib portions (14), the end being located closest to the outer end of the turn portion (12), decreases as the second rib portion (14) is located farther from the center rib portion (13A) in an arrangement of the straight portions (11).

14. The fuel cell separator according to any one of claims 1 to 13, wherein the reactant gas flow region (8, 9) is formed to have a band shape as a whole.

15. The fuel cell separator according to claim 14, wherein the reactant gas flow region (8, 9) is formed to have a serpentine shape as a whole.

16. A fuel cell comprising:
a pair of fuel cell separators (6A, 6B) including the fuel cell separator according to any one of claims 1 to 15; and
an electrolyte layer-electrode assembly including an electrolyte layer (1) and a pair of electrodes (4A, 4B) sandwiching the electrolyte layer (1), wherein
the electrolyte layer-electrode assembly is sandwiched between the pair of fuel cell separators (6A, 6B).

## Patentansprüche

1. Brennstoffzellen-Separator, der so ausgebildet ist, dass er eine Plattenform hat, und der einen Reaktionsgas-Strömungsbereich (8, 9) umfasst, der an wenigstens einer Hauptfläche des Brennstoffzellen-Separators ausgebildet ist, wobei der Gas-Strömungsbereich (8, 9) eine Vielzahl rinnenartiger gerader Abschnitte (11) sowie einen oder mehrere Kurvenabschnitt/e (12) enthält und so ausgebildet ist, dass er eine gebogene Form hat, und ein Reaktionsgas durch ihn hindurchströmt, wobei
erste Stegabschnitte (13) in der Vielzahl gerader Abschnitte (11) ausgebildet sind;
der Kurvenabschnitt (12) so ausgebildet ist, dass er einen der geraden Abschnitte (11a), der dem Kurvenabschnitt (12) vorgelagert ist, und einen der geraden Abschnitte (11 b) verbindet, der dem Kurvenabschnitt (12) nachgelagert ist, und er so ausgebildet ist, dass das Reaktionsgas von dem vorgelagerten geraden Abschnitt (11a) durch ihn hindurch zu dem nachgelagerten geraden Abschnitt (11 b) strömt;
wenn der erste Stegabschnitt (13), der zwischen dem vorgelagerten geraden Abschnitt (11a) und dem nachgelagerten geraden Abschnitt (11b) ausgebildet ist, die benachbart zueinander sind, als ein mittlerer Stegabschnitt (13A) definiert ist und eine virtuelle Linie, die durch eine Mitte des mittleren Stegabschnitts (13A) in Breitenrichtung hindurch verläuft und sich in einer Richtung erstreckt, in der sich der mittlere Stegabschnitt (13A) erstreckt, als eine Mittellinie (131) definiert ist, und eine virtuelle Linie, die durch ein vorderes Ende des mittleren Stegabschnitts (13A) hindurch verläuft und sich in einer Richtung senkrecht zu der Mittellinie (131) erstreckt, als eine Grenzlinie (132) definiert ist, die eine Grenze zwischen dem Kurvenabschnitt (12) und dem geraden Abschnitt (11) ist,
wenigstens einer von dem einen oder den mehreren Kurvenabschnitt/en (12) einen Gas-Mischabschnitt (12b), einen Gas-Zusammenführabschnitt (12a), durch den das Reaktionsgas von dem vorgelagerten geraden Abschnitt (11a) zu dem Gas-Mischabschnitt (12b) strömt, und einen Gas-Trennabschnitt (12c) enthält, durch den das Reaktionsgas von dem Gas-Mischabschnitt (12b) zu dem nachgelagerten geraden Abschnitt (11b) strömt;
der Gas-Zusammenführabschnitt (12a) an der der Mittellinie (131) der vorgelagerten Seite ausgebildet ist und der Gas-Trennabschnitt (12c) an der der Mittellinie (131) nachgelagerten Seite ausgebildet ist,
der Gas-Mischabschnitt (12b) einen vertieften Abschnitt (121) und eine Vielzahl zylindrisch geformter vorstehender Abschnitte (122) enthält, die so eingerichtet sind, dass sie von einer Bodenfläche des vertieften Abschnitts (121) vorstehen;
zweite Stegabschnitte (14) in dem Gas-Mischabschnitt (12a) und dem Gas-Trennabschnitt (12c) ausgebildet sind, untere Enden der zweiten Stegabschnitte (14) mit den ersten Stegabschnitten (13) verbunden sind und die zweiten Stegabschnitte (14) so eingerichtet sind, dass sie sich von den ersten Stegabschnitten (13) aus erstrecken;
die zweiten Stegabschnitte (14) so ausgebildet sind, dass bezüglich zweier benachbarter Stegabschnitte (14) die Länge des zweiten Stegabschnitts (14), der sich näher an dem mittleren Stegabschnitt (13a) befindet, kürzer ist als die Länge des zweiten Stegabschnitts (14), der in einer Richtung, in der sich die zweiten Stegabschnitte (14) erstrecken, weiter von dem mittleren Stegabschnitt (13a) entfernt ist, und
ein äußerster gebogener zweiter Stegabschnitt (141) so ausgebildet ist, dass er, in einer Dickenrichtung des Brennstoffzellen-Separators gesehen, nach innen auf die Mittellinie (131) zu gebogen ist, wobei der äußerste gebogene zweite Stegabschnitt (141) derjenige zweite Stegabschnitt (14) ist, der in dem Gas-Zusammenführabschnitt (12a) oder/und dem Gas-Trennabschnitt (12c) ausgebildet ist, und derjenige zweite Stegabschnitte (14) ist, der am weitesten von dem mittleren Stegabschnitt (13a) entfernt ist; und
entweder (a) die anderen zweiten Stegabschnitte (14) als der äußerste gebogene zweite Stegabschnitt (141) so ausgebildet sind, dass sie nicht gebogen sind,
oder (b) eine Vielzahl gebogener zweiter Stegabschnitte (141, 142, 143), die den äußersten gebogenen zweiten Stegabschnitt (14) einschließen, in dem Gas-Zusammenführabschnitt (12a) oder/und dem Gas-Trennabschnitt (12c) ausgebildet sind, wobei die Vielzahl gebogener zweiter Stegabschnitte (141, 142, 143) so ausgebildet sind, dass sie nach innen auf die Mittellinie (131) zu gebogen sind; und
benachbart zueinander und so ausgebildet sind, dass ein Abstand zwischen einem vorderen Endabschnitt des zweiten Stegabschnitts (14), der sich näher an dem mittleren Stegabschnitt (13a) befindet, und der Mittellinie (131) genauso lang ist wie oder länger als ein Abstand zwischen einem vorderen Endabschnitt des zweiten Stegabschnitts (14), der am weitesten von dem mittleren Stegabschnitt (13a) entfernt ist, und der Mittellinie (131),
und wenigstens ein anderer der zweiten Stegabschnitte als die Vielzahl gebogener zweiter Stegabschnitte so ausgebildet ist, dass er nicht gebogen ist.

2. Brennstoffzellen-Separator nach Anspruch 1, wobei die zylindrisch geformten vorstehenden Abschnitte (122) so angeordnet sind, dass sie einander, in einer Richtung gesehen, in der sich die ersten Stegabschnitte (13) erstrecken, überlappen.

3. Brennstoffzellen-Separator nach Anspruch 1 oder 2, wobei die zylindrisch geformten vorstehenden Abschnitte (122) an Verlängerungen der zweiten Stegabschnitte (14) vorhanden sind.

4. Brennstoffzellen-Separator nach einem der Ansprüche 1 bis 3, wobei die zylindrisch geformten vorstehenden Abschnitte (122) so angeordnet sind, dass sie einander, in einer Richtung senkrecht zu einer Richtung gesehen, in der sich die ersten Stegabschnitte (13) erstrecken, überlappen.

5. Brennstoffzellen-Separator nach einem der Ansprüche 1 bis 3, wobei die zylindrisch geformten vorstehenden Abschnitte (122), in einer Richtung senkrecht zu einer Richtung gesehen, in der sich die ersten Stegabschnitte (13) erstrecken, zickzack-artig angeordnet sind.

6. Brennstoffzellen-Separator nach einem der Ansprüche 1 bis 5, wobei
der äußerste gebogene zweite Stegabschnitt (141) einen langen Abschnitt (141 a), der sich von dem ersten Stegabschnitt (13) aus erstreckt, sowie einen kurzen Abschnitt (141 b) enthält, der sich von einem vorderen Ende des langen Abschnitts (141) nach innen auf die Mittellinie (131) zu erstreckt; und
der kurze Abschnitt (141b) so ausgebildet ist, dass er sich an einem äußeren Ende des Kurvenabschnitts (12) entlang erstreckt.

7. Brennstoffzellen-Separator nach Anspruch 6, wobei der äußerste gebogene zweite Stegabschnitt (141) so ausgebildet ist, dass er, in der Dickenrichtung des Brennstoffzellen-Separators gesehen, eine L-Form hat.

8. Brennstoffzellen-Separator nach Anspruch 6, wobei die zylindrisch geformten vorstehenden Abschnitte (122) an einer Verlängerung einer Rinne (15) vorhanden sind, die zwischen dem kurzen Abschnitt (141 b) des äußersten gebogenen zweiten Rippenabschnitts (141) und dem äußeren Ende des Kurvenabschnitts (12) ausgebildet ist.

9. Brennstoffzellen-Separator nach Anspruch 8, wobei die zylindrisch geformten vorstehenden Abschnitte (122), die an der Verlängerung der Rinne vorhanden sind, die zwischen dem kurzen Abschnitt (141b) des äußersten gebogenen zweiten Stegabschnitts (141, 142, 143) und dem äußeren Ende des Kurvenabschnitts (12) ausgebildet ist, durch einen Teil des äußeren Endes des Kurvenabschnitts (12) gebildet werden.

10. Brennstoffzellen-Separator nach einem der Ansprüche 1 bis 9, wobei
jeder der gebogenen zweiten Stegabschnitte (142, 143) einen langen Abschnitt (142a, 143a), der sich von dem ersten Stegabschnitt (13) aus erstreckt, sowie einen kurzen Abschnitt (142b, 143b) enthält, der sich von einem vorderen Ende des langen Abschnitts (142a, 143a) nach innen auf die Mittellinie (131) zu erstreckt; und
der kurze Abschnitt (142b, 143b) so ausgebildet ist, dass er sich an einem äußeren Ende des Kurvenabschnitts (12) entlang erstreckt.

11. Brennstoffzellen-Separator nach Anspruch 10, wobei der gebogene zweite Stegabschnitt (142, 143) so ausgebildet ist, dass er, in der Dickenrichtung des Brennstoffzellen-Separators gesehen, eine L-Form hat.

12. Brennstoffzellen-Separator nach einem der Ansprüche 1 bis 11, wobei der Reaktionsgas-Strömungsabschnitt (8, 9) so ausgebildet ist, dass die Anzahl vorgelagerter gerader Abschnitte (11a) genauso groß ist wie oder größer als die Anzahl nachgelagerter gerader Abschnitte (11b).

13. Brennstoffzellen-Separator nach einem der Ansprüche 1 bis 12, wobei die zweiten Stegabschnitte (14) so ausgebildet sind, dass ein Abstand zwischen einem äußeren Ende des Kurvenabschnitts (12) und einem Ende jedes der zweiten Stegabschnitte (14) mit zunehmendem Abstand zu dem mittleren Stegabschnitt (13a) in einer Anordnung der geraden Abschnitte (11) abnimmt, wobei sich das Ende am nächsten an dem äußeren Ende des Kurvenabschnitts (12) befindet.

14. Brennstoffzellen-Separator nach einem der Ansprüche 1 bis 13, wobei der Reaktionsgas-Strömungsbereich (8, 9) so ausgebildet ist, dass er insgesamt eine Bandform hat.

15. Brennstoffzellen-Separator nach Anspruch 14, wobei der Reaktionsgas-Strömungsbereich (8, 9) so ausgebildet ist, dass er insgesamt eine Schlangenlinienform hat.

16. Brennstoffzelle, die umfasst:
ein Paar Brennstoffzellen-Separatoren (6A, 6B), die den Brennstoffzellen-Separator nach einem der Ansprüche 1 bis 15 einschließen; und
eine Elektrolytschicht-Elektroden-Anordnung, die eine Elektrolytschicht (1) und Paar Elektroden (4A, 4B) enthält, zwischen denen die Elektrolytschicht (1) eingeschlossen ist, wobei
die Elektrolytschicht-Elektroden-Anordnung zwischen den paarigen Brennstoffzellen-Separatoren (6A, 6B) eingeschlossen ist.

## Revendications

1. Séparateur de pile à combustible conformé pour présenter une forme de plaque, comprenant une zone de flux de gaz réactif (8, 9) qui est formée sur au moins une surface principale du séparateur de pile à combustible, dans lequel la zone de flux de gaz (8, 9) comprend une pluralité de parties droites en forme de rainure (11) et une ou plusieurs parties de retournement (12), et est formée pour présenter une forme coudée, à travers laquelle s'écoule un gaz réactif, dans lequel :
des premières parties de nervure (13) sont formées parmi la pluralité de parties droites (11) ;
la partie de retournement (12) est formée de manière à connecter une des parties droites (11a) situées en amont de la partie de retournement (12) et une des parties droites (11b) situées en aval de la partie de retournement (12), et est formée de manière à ce que le gaz réactif s'écoule en la traversant depuis la partie droite en amont (11a) vers la partie droite en aval (11b) ;
lorsque la première partie de nervure (13) formée entre la partie droite en amont (11a) et la partie droite en aval (11b) adjacentes entre elles est définie comme une partie de nervure centrale (13A), et une ligne virtuelle passant à travers un centre en direction de la largeur de la partie de nervure centrale (13A) et s'étendant selon une direction dans laquelle s'étend la partie de nervure centrale (13A) est définie comme une ligne centrale (131), et une ligne virtuelle passant à travers une extrémité de pointe de la partie de nervure centrale (13A) et s'étendant selon une direction perpendiculaire à la ligne centrale (131) est définie comme une ligne de délimitation (132), qui est une délimitation entre la partie de retournement (12) et la partie droite (11),
au moins une desdites une ou plusieurs parties de retournement (12) comprend une partie de mélange de gaz (12b), une partie de jonction de gaz (12a) à travers laquelle le gaz réactif provenant de la partie droite en amont (11a) s'écoule vers la partie de mélange de gaz (12b), et une partie de séparation de gaz (12c) à travers laquelle le gaz réactif provenant de la partie de mélange de gaz (12b) s'écoule vers la partie droite en aval (11b) ;
la partie de jonction de gaz (12a) est formée sur le côté amont de la ligne centrale (131), et la partie de séparation de gaz (12c) est formée sur le côté aval de la ligne centrale (131),
la partie de mélange de gaz (12b) comprend une partie renfoncée (121) et une pluralité de parties saillantes de forme cylindrique (122) configurées pour faire saillie depuis une surface de fond de la partie renfoncée (121) ;
des deuxièmes parties de nervure (14) sont formées dans la partie de jonction de gaz (12a) et la partie de séparation de gaz (12c), des extrémités de base des deuxièmes parties de nervure (14) étant connectées aux premières parties de nervure (13), les deuxièmes parties de nervure (14) étant configurées pour s'étendre depuis les premières parties de nervure (13) ;
les deuxièmes parties de nervure (14) sont formées de telle sorte que, par rapport aux deux deuxièmes parties de nervure adjacentes (14), la longueur de la deuxième partie de nervure (14) située plus près de la partie de nervure centrale (13A) est plus courte que la longueur de la deuxième partie de nervure (14) située plus loin de la partie de nervure centrale (13A) selon une direction dans laquelle s'étendent les deuxièmes parties de nervure (14), et
une deuxième partie de nervure coudée la plus externe (141) est formée de manière à être coudée vers l'intérieur en direction de la ligne centrale (131), vue en direction de l'épaisseur du séparateur de pile à combustible, la deuxième partie de nervure coudée la plus externe (141) étant la deuxième partie de nervure (14) formée dans au moins une partie parmi la partie de jonction de gaz (12a) et la partie de séparation de gaz (12c), et étant la deuxième partie de nervure (14) située le plus loin de la partie de nervure centrale (13A) ; et
soit (i) les deuxièmes parties de nervure (14) autres que la deuxième partie de nervure coudée la plus externe (141) sont formées de manière à ne pas être coudées,
soit (ii) une pluralité de deuxièmes parties de nervure coudées (141, 142, 143) comprenant la deuxième partie de nervure coudée la plus externe (141) est formée dans au moins une partie parmi la partie de jonction de gaz (12a) et la partie de séparation de gaz (12c), la pluralité de deuxièmes parties de nervure coudées (141, 142, 143) est formée de manière à être coudée vers l'intérieur en direction de la ligne centrale (131) ; et
sont adjacentes entre elles et formées de telle sorte qu'une distance entre une partie d'extrémité de pointe de la deuxième partie de nervure (14) située plus près de la partie de nervure centrale (13A) et la ligne centrale (131) est supérieure ou égale à une distance entre une partie d'extrémité de pointe de la deuxième partie de nervure (14) située plus loin de la partie de nervure centrale (13A) et la ligne centrale (131),
et au moins une partie parmi les deuxièmes parties de nervure autres que la pluralité de deuxièmes parties de nervure coudées est formée de manière à ne pas être coudée.

2. Séparateur de pile à combustible selon la revendication 1, dans lequel les parties saillantes de forme cylindrique (122) sont pourvues de manière à se chevaucher entre elles vues selon une direction dans laquelle s'étendent les premières parties de nervure (13).

3. Séparateur de pile à combustible selon la revendication 1 ou 2, dans lequel les parties saillantes de forme cylindrique (122) sont pourvues sur des extensions des deuxièmes parties de nervure (14).

4. Séparateur de pile à combustible selon l'une quelconque des revendications 1 à 3, dans lequel les parties saillantes de forme cylindrique (122) sont pourvues de manière à se chevaucher entre elles, vues selon une direction perpendiculaire à une direction dans laquelle s'étendent les premières parties de nervure (13).

5. Séparateur de pile à combustible selon l'une quelconque des revendications 1 à 3, dans lequel les parties saillantes de forme cylindrique (122) sont pourvues selon une forme de zigzag, vues selon une direction perpendiculaire à une direction dans laquelle s'étendent les premières parties de nervure (13).

6. Séparateur de pile à combustible selon l'une quelconque des revendications 1 à 5, dans lequel :
la deuxième partie de nervure coudée la plus externe (141) comprend une partie longue (141a) qui s'étend depuis la première partie de nervure (13) et une partie courte (141b) qui s'étend depuis une extrémité de pointe de la partie longue (141a) vers l'intérieur en direction de la ligne centrale (131) ; et
la partie courte (141b) est formée de manière à s'étendre le long d'une extrémité externe de la partie de retournement (12).

7. Séparateur de pile à combustible selon la revendication 6, dans lequel la deuxième partie de nervure coudée la plus externe (141) est formée pour présenter une forme de L, vue en direction de l'épaisseur du séparateur de pile à combustible.

8. Séparateur de pile à combustible selon la revendication 6, dans lequel les parties saillantes de forme cylindrique (122) sont pourvues sur une extension d'une rainure (15) formée entre la partie courte (141b) de la deuxième partie de nervure coudée la plus externe (141) et l'extrémité externe de la partie de retournement (12).

9. Séparateur de pile à combustible selon la revendication 8, dans lequel les parties saillantes de forme cylindrique (122) pourvues sur l'extension de la rainure formée entre la partie courte (141b) de la deuxième partie de nervure coudée la plus externe (141, 142, 143) et l'extrémité externe de la partie de retournement (12) sont formées par une partie de l'extrémité externe de la partie de retournement (12).

10. Séparateur de pile à combustible selon l'une quelconque des revendications 1 à 9, dans lequel :
chacune des deuxièmes parties de nervure coudées (142, 143) comprend une partie longue (142a, 143a) qui s'étend depuis la première partie de nervure (13) et une partie courte (142b, 143b) qui s'étend depuis une extrémité de pointe de la partie longue (142a, 143a) vers l'intérieur en direction de la ligne centrale (131) ; et
la partie courte (142b, 143b) est formée de manière à s'étendre le long d'une extrémité externe de la partie de retournement (12).

11. Séparateur de pile à combustible selon la revendication 10, dans lequel la deuxième partie de nervure coudée (142, 143) est formée pour présenter une forme de L, vue en direction de l'épaisseur du séparateur de pile à combustible.

12. Séparateur de pile à combustible selon l'une quelconque des revendications 1 à 11, dans lequel la zone de flux de gaz réactif (8, 9) est formée de telle sorte que le nombre de parties droites en amont (11a) est supérieur ou égal au nombre de parties droites en aval (11b).

13. Séparateur de pile à combustible selon l'une quelconque des revendications 1 à 12, dans lequel les deuxièmes parties de nervure (14) sont formées de telle sorte qu'une distance entre une extrémité externe de la partie de retournement (12) et une extrémité de chacune des deuxièmes parties de nervure (14), l'extrémité étant la plus proche de l'extrémité externe de la partie de retournement (12), décroît, la deuxième partie de nervure (14) étant plus éloignée de la partie de nervure centrale (13A) selon un agencement des parties droites (11).

14. Séparateur de pile à combustible selon l'une quelconque des revendications 1 à 13, dans lequel la zone de flux de gaz réactif (8, 9) est formée de manière à présenter dans l'ensemble une forme de bande.

15. Séparateur de pile à combustible selon la revendication 14, dans lequel la zone de flux de gaz réactif (8, 9) est formée de manière à présenter dans l'ensemble une forme de serpentin.

16. Pile à combustible comprenant :
une paire de séparateurs de pile à combustible (6A, 6B) comprenant le séparateur de pile à combustible selon l'une quelconque des revendications 1 à 15 ; et
un assemblage d'électrodes à couche d'électrolyte comprenant une couche d'électrolyte (1) et une paire d'électrodes (4A, 4B) entre lesquelles est intercalée la couche d'électrolyte (1), dans lequel
l'assemblage d'électrodes à couche d'électrolyte est intercalé entre la paire de séparateurs de pile à combustible (6A, 6B).
